# EUROPEAN PATENT APPLICATION

(11) **EP 2 571 150 A2**
(43) Date of publication of application: **20.03.2013**
(21) Application number: 12004883.0
(22) Date of filing: 29.06.2012
(51) Int. Cl.: H02M 3/155

(54) **Power-supply circuit for an electrical appliance having a battery and a dc-to-dc converter**

(30) Priority: 16.09.2011 EP 11007660
(71) Applicant: Braun GmbH, 61476 Kronberg/Taunus (DE)
(72) Inventor: Klemm, Torsten, 65760 Eschborn (DE); Faranda, Leo, 63110 Rodgau (DE)

(57) **Abstract**

The invention relates to a supply voltage circuit for a small electrical appliance that contains a battery, an electric motor, a controllable switch, a control circuit and a DC-to-DC converter, wherein the electric motor is connected to the battery by means of the controllable switch and the DC-to-DC converter powers the control circuit from the battery.

The control circuit controls the controllable switch in such a way that the electric motor is operated with pulsed voltage, whereby the pulsed voltage has a pulse-pause ratio whose pause is such that the DC-to-DC converter will even power the control circuit if it only operates during the pauses.

## Description

### Field of the invention

The invention relates to a power-supply circuit for a battery-powered small electrical appliance which comprises a first load with a relatively high power consumption, a controllable switch, at least a second load with a relatively low power consumption and a DC-to-DC converter, wherein the first load is connected to the battery via the controllable switch and the DC-to-DC converter supplies battery power to the second load. Such power supply circuits are e.g. used in battery-powered electrical toothbrushes or shavers whose batteries consist of only one cell. The term "battery" refers to both rechargeable (accumulators) and non-rechargeable batteries. The invention further relates to a power supply method for such a small electrical appliance.

### Background of the invention

WO 02/15374 A1 describes a power supply circuit for electromotive small electrical appliances that are battery-powered and controlled by means of a microcontroller. The power supply circuit comprises a DC-to-DC converter that increases the voltage of the battery to a level that is sufficient for the microcontroller. The DC-to-DC converter is a step-up converter whose choke coil is formed by the electric motor. The electric motor is controlled by the microcontroller with a pulse width modulated voltage in order to, on the one hand, enable the motor to run at the desired speed and, on the other hand, enable the step-up converter to provide sufficient voltage. However, the power supply circuit has the disadvantage that the step-up converter does not supply voltage when the speed of the electric motor is reduced - for instance when switching off the motor.

EP 0 875 978 B1 describes a power supply circuit for electromotive small electrical appliances which are powered by an accumulator and controlled by means of a microcontroller. The power supply circuit comprises a DC-to-DC converter that increases the voltage of the accumulator to a level that is sufficient for the microcontroller. If the accumulator is sufficiently charged, the microcontroller is powered by the DC-to-DC converter and the accumulator. If the accumulator is not sufficiently charged, the microcontroller is powered via a capacitor while charging the accumulator by means of a charger, whereas the charging process of the accumulator is intermittently interrupted for short periods of time in order to recharge the capacitor.

Typical DC-to-DC converters contain an internal circuit that deactivates the DC-to-DC converter whenever the supply voltage drops below a minimum voltage of e.g. 0.95 V. If the DC-to-DC converter powers a control circuit of a small electrical appliance containing a battery with only one cell (e.g. a NiMH battery with a nominal voltage of 1.2 V) and an electric motor, the starting current (e.g. 7 A) of the electric motor might lead at least temporarily to a drop in battery voltage sufficient for the DC-to-DC converter to deactivate and stop supplying power to the control circuit, even with a fully-charged battery. This might occur in an old battery with a relatively high internal resistance (e.g. 50 mΩ).

### Object of the invention

The object of the present invention is to describe a simple circuit and a method of power supply to a small electrical appliance as described above that better exploits any charge still left in the battery.

### Solution according to the invention

This object is solved by means of a power supply circuit in which the load with the relatively high power consumption is powered by a pulsed voltage having a pulse-pause ratio, and in which the DC-to-DC converter powers the load with the relatively low power consumption at least during the pauses.

The power supply circuit has the advantage that the small electrical appliance can even be powered for a relatively long period of time with one single battery charge when the battery presents a high internal (e.g. age-related) resistance. As the load with the relatively high power consumption, e.g. an electric motor, is powered by a pulsed voltage and during the pauses the battery voltage exceeds the voltage present during the pulses, the DC-to-DC converter at least operates during the pauses and charges a capacitor connected in the usual manner at its output terminal, the capacitor powering the load with the relatively low power consumption, for instance a control circuit, which controls the functions of the small electrical appliance. In this manner, the battery charge can be almost completely used - although at a relatively low voltage in older batteries. The pulsed voltage preferably has a pulse-pause ratio whose pauses are adjusted in such a way that the DC-to-DC converter can adequately power the second load, even when only operating during the pauses.

It is particularly advantageous if the DC-to-DC converter exhibits a control port, with the DC-to-DC converter activated when the control port carries sufficient voltage. The control port is connected to the control circuit that can switch the DC-to-DC converter on and off. The power supply circuit preferably also contains a connection to a charger or a charging coil to charge the accumulator, the former also being connected to the control port of the DC-to-DC converter. The DC-to-DC converter is therefore operating as long as the charger or the charging coil supplies sufficient voltage, or as long as the control circuit keeps the DC-to-DC converter operating. The control circuit can thus prevent the DC-to-DC converter from automatically switching off in the usual manner during periods of low battery voltage. It is advantageous, for instance, for the control circuit to ensure that the DC-to-DC converter remains in operation during the short-term voltage drop that ensues from switching on the motor. The DC-to-DC converter may still exhibit the usual internal circuitry that switches off the DC-to-DC converter when the supply voltage drops below a minimal voltage, whereby this minimal voltage preferably is set to a relatively low value, which ensures that the battery will not be deeply discharged by the DC-to-DC converter.

The power supply circuit is particularly suitable for a battery-powered small electrical appliance, such as an electric toothbrush or shaver, whose batteries only consist of only one cell and whose battery voltages (e.g. 1.2 V) must be increased by a DC-to-DC converter to a voltage (e.g. 3 V) suitable to the control circuit.

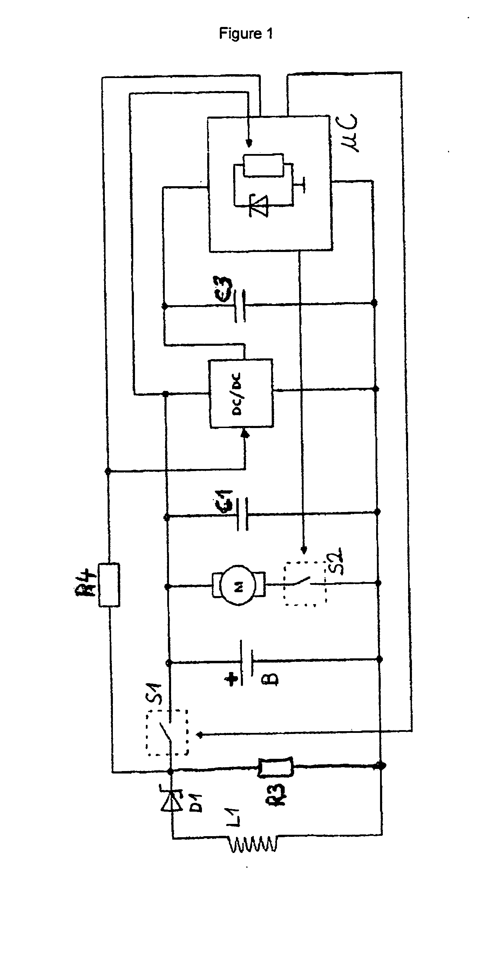

The invention is explained hereinafter exemplarily by means of an embodiment that is depicted in the figure.

### Detailed description of the figure

The power supply circuit depicted in the figure contains a charging coil L1 connected to a battery B via a diode D1 and a first controllable switch S1, with one end of the charging coil L1 connected to the anode of the diode D1 and the other end of the charging coil L1 to the negative pole of the battery B (reference potential). A first capacitor C1 and a series connection from an electric motor M and a second controllable switch S2 are connected in parallel to the battery B. The battery B is also connected to a DC-to-DC converter DC/DC. The DC-to-DC converter DC/DC further exhibits a control input and an output terminal, to which one end of a second capacitor C3 is connected. The other end of the second capacitor C3 is connected to the negative pole of the battery B. A control circuit uC presents two terminals for its power supply, one of which is connected to the output port of the DC-to-DC connector DC/DC, the other to the reference potential. The control circuit uC further exhibits an input which is connected to the positive pole of the battery B as well as three outputs, one of which is connected to the first controllable switch S1, the second to the second controllable switch S2, and the third to the control input of the DC-to-DC converter DC/DC and to one end of a resistor R4. The other end of the resistor R4 is connected to the cathode of the diode D1, the first controllable switch S1 and one end of a second resistor R3, whose other end is connected to the reference potential. The first controllable switch S1 is only represented schematically. It may, for instance, consist of an electronic circuit that will automatically activate when the charging coil applies sufficient voltage in order to charge the battery.

The method according to which this power supply circuit operates is explained hereafter, initially assuming that the DC-to-DC converter DC/DC is not operating. As a consequence, the second capacitor C3 at the output port of the DC-to-DC converter is discharged, thus also rendering the control circuit uC inoperative and leaving both the first S1 and the second S2 controllable switch open. If a small electrical appliance with this type of power supply circuit is to be switched on (if, for instance, the motor M is to be put into operation), the small electrical appliance must be connected with a charger not represented in the figure in order for the charging coil L1 to supply voltage via the diode D1 and the resistor R4 to the control input of the DC-to-DC converter. If the voltage at the control input is sufficiently high, the DC-to-DC converter switches on and charges the second capacitor C3 connected to its output (e.g. to a voltage of 3 V). However, the DC-to-DC converter requires a minimum voltage in order to supply power and therefore, despite the sufficiently high voltage at its control input, will not supply power if the voltage at the battery (e.g. a NiMH accumulator with a nominal voltage of 1.2 V) or at the first capacitor C1 is below the minimum voltage.

If the voltage at the second capacitor C3 is sufficiently high, the control circuit uC switches on and takes control of the small electrical appliance including the motor M (via the controllable switch S2), the DC-to-DC converter DC/DC and the battery charging process (in particular the termination of the charging process by opening the controllable switch S1 when the battery reaches full charge condition) as well as additional loads, where required, not described in the figure, such as a display. The control of the small electrical appliance depends on the battery voltage or the voltage at the first capacitor C1, which is continuously monitored by the control circuit. It is particularly advantageous if the control circuit keeps the DC-to-DC converter in operating condition during the start-up of the motor by applying a respective signal to the control input of the DC-to-DC converter. Should the voltage at the first capacitor C1 temporarily drop below the minimum voltage of the DC-to-DC converter, due to the signal applied to the control input the DC-to-DC converter will immediately resume power supplying as soon as the minimum voltage is reached again.

The control circuit uC powers the motor M with a pulsed voltage, which preferably exhibits a fixed frequency (fixed cycle duration) and a fixed pulse-pause ratio. The control circuit controls the second controllable switch S2 e.g. in such a way that it will be switched on during 95 - 99 % of the cycle and is only inactive during 1 - 5 % of the cycle. It is preferably operational at a frequency of 250 Hz and is switched on during approx. 98 % of the cycle time, while the motor M is running. The length of the pauses of the pulsed voltage, the properties of the DC-to-DC converter, the size of the second capacitor C3 (e.g. 10 µF), and the power consumption of the control circuit uC (e.g. TI MSP 430) are optimally coordinated in order for the control circuit to receive a sufficient power supply, even when the DC-to-DC converter is charging the second capacitor C3 only during the pauses. This might occur when the battery voltage is relatively low, that is, the battery is almost empty, and/or the motor M has a particularly high power requirement - for instance during start-up. If the battery voltage is relatively high, the DC-to-DC converter may be operating during the whole cycle length and supplying sufficient current to not only power the control circuit uC, but the other loads as well. With medium battery voltage and a running motor M, the situation can arise that the voltage at the first capacitor C1 drops below the minimum voltage of the DC-to-DC converter after half a cycle and thus will stop supplying power. The control circuit will then temporarily switch off the other loads and will draw power from the second capacitor C3 during the remaining cycle time, while the DC-to-DC converter will recharge the second capacitor C3 during the pause (if the DC-to-DC converter's minimum voltage has been reached again after switching off of the motor).

The above-described power supply circuit of a small electrical appliance hence operates according to a method wherein the load with a relatively high power consumption is powered by a pulsed voltage having a pulse-pause ratio and the load with a relatively low power consumption is powered by the DC-to-DC converter, at least during the pauses. The pauses are preferably adjusted such that the load with the relatively low power consumption will receive sufficient power even with the DC-to-DC converter merely operating during the pauses. If the battery voltage is higher than a determined minimum voltage, the DC-to-DC converter will power the second and further loads even during the pulses. The control circuit furthermore provides continuous monitoring of the battery voltage and switches the small electrical appliance off whenever necessary. If, for instance, the battery voltage is lower than a first threshold value directly after switching off the motor, or the battery voltage is lower than a second threshold value during operation of the motor, the control circuit preferably first disconnects the motor, then the other loads, and lastly the DC-to-DC converter. As soon as the voltage at the second capacitor C3 has dropped accordingly, the control circuit uC will also disconnect. In this manner, a deep discharge of the battery can be avoided. Then the small electrical appliance can only be put back into operation by charging the battery B.

The control circuit uC is preferably implemented in a microcontroller.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

## Claims

1. Power supply circuit for a small electrical appliance containing a battery, a first load with a relatively high power consumption, a controllable switch, at least a second load with a relatively low power consumption and a DC-to-DC converter, wherein the first load is connected to the battery via the controllable switch and the DC-to-DC controller supplies power from the battery to the second load, **characterized in that** the controllable switch supplies to the first load a pulsed voltage having a pulse-pause ratio, and **in that** the DC-to-DC converter powers the second load at least during the pauses.

2. Power supply circuit according to claim 1, wherein the first load is an electric motor and the second load is a control circuit.

3. Power supply circuit according to claim 1 or 2, wherein the pulsed voltage has a pulse-pause ratio whose pause is adjusted in such a way that the DC-to-DC converter can sufficiently power the second load even when only operating during the pauses.

4. Power supply circuit according to one of the previous claims, wherein the DC-to-DC converter exhibits a control input and can be switched on and off by applying the appropriate voltages to the control input.

5. Power supply circuit according to claim 4, wherein it further comprises a charging coil, and wherein the DC-to-DC converter can be activated by the charging coil by applying a voltage to the control input.

6. Power supply circuit according to claims 4 or 5, wherein the control input of the DC-to-DC converter is connected to the control circuit.

7. Small electrical appliance, for example electric toothbrush or shaver, with a power supply circuit according to one of the previous claims.

8. Method of supplying power to a small electrical appliance containing a battery, a first load with a relatively high power consumption, a controllable switch, at least a second load with a relatively low power consumption, and a DC-to-DC converter, wherein the first load is connected to the battery via the controllable switch and the DC-to-DC controller supplies power from the battery to the second load, **characterized in that** the first load is powered
with a pulsed voltage, which has a pulse-pause ratio, and **in that** the DC-to-DC converter powers the second load at least during the pauses.

9. Method according to claim 8, wherein the DC-to-DC converter powers the second and possibly further loads even during the pulses, when the battery voltage during the pulses is higher than a determined minimum voltage.

10. Method according to claim 8 or 9, wherein the pulsed voltage has a pulse-pause ratio whose pause is adjusted in such a way that the DC-to-DC converter can sufficiently power the second load even when only operating during the pauses.

11. Method according to claims 8, 9 or 10, wherein the first load is an electric motor and the second load is a control circuit that controls the functions of the small electrical appliance.

12. Method according to claim 11, **characterized in that** the control circuit monitors the battery voltage and that the control circuit switches off the small electrical appliance when the battery voltage drops below a first voltage with the electric motor not running, or that the battery voltage drops below a second voltage with the electric motor running.

13. Method according to claim 12, wherein the control circuit, when switching off the small electrical appliance, switches off the DC-to-DC converter only after the electric motor or the other loads.
